# EUROPÄISCHE PATENTANMELDUNG

(11) **EP 3 354 954 A1**
(43) Veröffentlichungstag der Anmeldung: **01.08.2018**
(21) Anmeldenummer: 17153702.0
(22) Anmeldetag: 30.01.2017
(51) Int. Cl.: F16L 33/207

(54) **VERFAHREN ZUM AUSBILDEN EINES SCHLAUCHANSCHLUSSES AN EINEM ROHR**

(71) Anmelder: Transfluid Maschinenbau GmbH, 57392 Schmallenberg (DE)
(72) Erfinder: Pieper, Gerhard, 57392 Schmallenberg (DE)
(74) Vertreter: Grosse, Wolf-Dietrich Rüdiger

(57) **Zusammenfassung**

Die Erfindung betrifft ein Verfahren zum Ausbilden eines Schlauchanschlusses 105 an einem Ende eines Rohres 100. An seinem schlauchseitigen Ende weist das Rohr zwei axial beabstandete Erhebungen auf zur Ausbildung einer umlaufenden Nut, in welche eine Verpresshülse 300 zur Verbindung des Rohres mit einem Schlauch 400 hinein verpresst wird. Um sicherzustellen, dass die Erhöhungen auch starken und häufigen Druck- oder Biegelastwechseln standhalten können, wird erfindungsgemäß vorgeschlagen, zumindest eine der Erhöhungen durch eine Lochscheibe zu realisieren, welche auf das Rohr aufgeschoben und an vorbestimmter axialer Position durch zwei Wülste festgelegt wird.

## Beschreibung

Die Erfindung betrifft ein Verfahren zum Ausbilden eines Schlauchanschlusses an einem Ende eines Rohres. Darüber hinaus betrifft die Erfindung ein Verfahren zum Anschließen eines Schlauches an dem erfindungsgemäß hergestellten schlauchseitigen Ende des Rohres sowie ein entsprechendes Rohr mit dem besagten Schlauchanschluss und optional mit aufmontiertem Schlauch.

Rohre mit schlauchseitigem Ende sind im Stand der Technik hinlänglich bekannt. Im einfachsten Fall wird ein Ende des Schlauches einfach auf ein schlauchseitiges Ende eines Rohres aufgeschoben. Für hochbelastete Rohr-/Schlauchverbindungen, wie sie insbesondere bei hydraulischen Anwendungen gefordert werden, ist es weiterhin bekannt, an einem Rohr einen Schlauchanschlussbereich vorzusehen, wobei das Rohr dann beabstandet zu seiner schlauchseitigen Öffnung zwei axial beabstandete sich radial nach außen erstreckende Erhöhungen aufweist, um eine Verpresshülse in einer Nut zwischen den beiden Erhöhungen zu positionieren und mit dem aufgeschobenen Schlauch zu vercrimpen.

Im Stand der Technik gibt es verschiedene Verfahren zum Herstellen der beiden Erhöhungen in der Wandung des Rohres. Ein erstes Herstellungsverfahren sieht vor, dass zunächst ein Rohrstück und ein Schlauchteil des Rohres separat hergestellt werden und nachfolgend, z. B. durch Löten, zu der gesamten Rohrleitung verbunden werden. In dem Schlauchteil sind dann die notwendigen Erhebungen für den Schlauchanschluss vorgefertigt. Insgesamt ist dieses erste Herstellungsverfahren sehr teuer, weil das Herstellen der zwei Einzelteile sehr viel händische Vorarbeit erfordert und das spätere Zusammenlöten oder Zusammenschweißen ebenfalls sehr zeitaufwendig und damit lohnintensiv ist.

Gemäß einem zweiten Herstellungsverfahren wird ein kurzer Rohrstutzen, auch Armatur genannt, mit den beiden Erhöhungen als Drehteil hergestellt und anschließend, falls nötig, außerhalb des Schlauchanschlussbereiches gebogen. Auch dieses zweite Herstellungsverfahren ist teuer, da dafür eine sehr teure Maschine, insbesondere eine Mehrspindeldrehmaschine erforderlich ist.

Schließlich kann die gesamte Armatur aus einem Rohrstück hergestellt werden, die beiden Erhöhungen im Schlauchanschlussbereich werden dabei traditionell durch sequentielle Kaltumformung, insbesondere Stauchungen, hergestellt. Auch dieses Rohr kann außerhalb des Rohranschlussbereiches später noch gebogen werden, falls erforderlich. Diese Herstellungsvariante ist im Vergleich zu dem vorgenannten Herstellungsverfahren günstiger, allerdings zeigt insbesondere das dritte Herstellungsverfahren folgende Nachteile:

Bei hydraulischen Anwendungen ist das Rohr ständigen Drucklastwechseln und Biegelastwechseln ausgesetzt, die insbesondere in radialer Richtung wirken. Bei den auf die im letzten Absatz beschriebene Weise traditionell hergestellten Rohren hat es sich gezeigt, dass diese an mindestens einer ersten der beiden Erhöhungen aufgrund der besagten Lastwechsel oftmals aufreißen. Der Grund dafür ist darin zu sehen, dass bei diesen radialen Erhöhungen, insbesondere wenn ihr Außendurchmesser größer als das 1,5fache des Außendurchmessers des Rohres ist, der Umformgrund sehr groß ist. Die mit der großen Umformung verbundene Ausdünnung und Kaltverfestigung des Materials führt zu einer nicht mehr ausreichenden Druckfestigkeit des Rohres. Es kann dann zu hydraulischen Undichtigkeiten oder sogar zu Schlauchabrissen und damit zu Totalausfällen des Bauteils kommen.

Ausgehend von diesem Stand der Technik liegt der Erfindung die Aufgabe zugrunde, ein bekanntes Verfahren zum Ausbilden eines Schlauchanschlusses an einem Ende eines Rohres dahingehend weiterzubilden, dass zumindest eine der für den Schlauchanschluss erforderlichen Erhöhungen in der Wandung des Rohres insofern stabiler ausgebildet wird, dass sie auch starken und häufigen Drucklastwechseln oder Biegelastwechseln standhalten kann.

Diese Aufgabe wird erfindungsgemäß durch das Verfahren nach Anspruch 1 gelöst. Demnach wird zu Beginn des Herstellungsprozesses eine Lochscheibe an eine vorbestimmte axiale Position auf das Rohrende aufgeschoben und dort durch Wülste vor und hinter der Lochscheibe axial festgelegt. Das Ausbilden der Wulste stellt eine deutlich geringere Materialbelastung für die Wandung des Rohres dar als die aus dem Stand der Technik bekannte Ausbildung der besagten Erhebungen, weil die Wülste jeweils nur einen wesentlich kleineren Außendurchmesser haben als die Erhebungen. Das Rohr ist deshalb im Bereich der Lochscheibe auch stark belastbar, insbesondere kann es Drucklastwechseln oder Biegelastwechseln gut standhalten. Außerdem ist das beschriebene erfindungsgemäße Verfahren preiswert.

Gemäß einem ersten Ausführungsbeispiel wird zum Ausbilden der Wülste vor und hinter der Lochscheibe vorteilhafterweise ein Dorn durch das Rohr hindurchgeschoben, dessen Außendurchmesser größer ist als der Innendurchmesser des Rohres, wodurch sich das Rohr aufweitet und es vor und hinter der Lochscheibe jeweils zur Ausbildung von einem der Wülste kommt. Alternativ können die Wülste vor und hinter der Lochscheibe auch mit Hilfe anderer (Kalt-) Umformverfahren in das Rohr eingebracht werden, z.B. durch Stauchen.

Für den später vorgesehenen Anschluss eines Schlauches an dem schlauchseitigen Ende des Rohres ist eine zweite Erhebung, d. h. ein sich radial nach außen erhebender Bund in der Wandung des Rohres erforderlich. Der Außendurchmesser der zweiten Erhebung ist vorzugsweise geringer als der Außendurchmesser der ersten Erhebung, d. h. der Lochscheibe. Jedenfalls ist der Außendurchmesser so gering und sind die Biegeradien und die axiale Erstreckung der zweiten Erhebung so groß, dass die Herstellung der zweiten Erhebung durch bekannte Kaltumformung im Einzelfall nicht zu einer starken Reduzierung der Druckfestigkeit des Rohres führt. Die zweite Erhebung ist zwischen einer schlauchseitigen Öffnung des Rohres und der Lochscheibe in einem vorbestimmten axialen Abstand zu der Lochscheibe anzuordnen. Auf diese Weise entsteht eine umlaufende Nut zwischen der Lochscheibe und dem Bund, in welche später eine Verpresshülse radial verpresst wird.

Die Begriffe "zweite Erhebung" und "Bund" werden in der vorliegenden Beschreibung gleichbedeutend verwendet.

Die Lochscheibe dient nur als Anschlag für eine später zu montierende Verpresshülse. In axialer Richtung muss sie nur fest positioniert sein, aber keine großen Kräfte aufnehmen, dafür reichen die Wülste aus. Im späteren Betrieb der Rohr-Schlauch-Verbindung muss der Rohrbereich, wo die Lochscheibe positioniert ist, nur ausreichend druckfest sein, was durch das beanspruchte Montageverfahren gewährleistet wird. Demgegenüber muss die zweite Erhebung nicht nur druckfest sein, sondern notfalls auch große axiale Kräfte aufnehmen können. Dazu ist die Ausbildung der zweiten Erhöhung durch bekannte Kaltumformung besser geeignet.

Vorzugsweise weist der Schlauchanschlussbereich zwischen der schlauchseitigen Öffnung des Rohres und dem sich radial erhebenden Bund noch ein Zahnprofil auf für einen besseren Halt des später aufgeschobenen Schlauches. Das Einbringen des Bundes und / oder des Zahnprofils erfolgt erfindungsgemäß beispielsweise durch einen mehrstufigen axialen Kaltumformprozess, inklusive Stauchen und/oder Rollieren.

Die oben genannte Aufgabe wird weiterhin durch ein Verfahren zum Anschließen eines Schlauches an dem schlauchseitigen Ende des Rohres gelöst, wobei das Ausbilden eines Schlauchanschlussbereiches an dem schlauchseitigen Ende des Rohres mit dem erfindungsgemäßen Verfahren erfolgt. Zum Anschließen des Schlauches ist dann zunächst die Verpresshülse auf den Schlauchanschlussbereich bis vor die Lochscheibe aufzuschieben, wobei die Lochscheibe einen Anschlag für die Verpresshülse bildet. Es erfolgt dann das eigentliche Aufschieben des Schlauches auf den Schlauchanschlussbereich des Rohres bis vor oder auf den Bund unter die Verpresshülse. Schließlich wird die Verpresshülse radial in die Nut zwischen der Lochscheibe und dem Bund verpresst und gleichzeitig wird die Verpresshülse auch mit dem aufgeschobenen Ende des Schlauches verpresst.

Die oben genannte Aufgabe wird schließlich durch ein Rohr mit dem besagten Schlauchanschlussbereich und optional auch mit dem aufgeschobenen Schlauch und der verpressten Verpresshülse gelöst. Vorteilhafte Ausgestaltungen der beschriebenen Verfahren und des Rohres sind Gegenstand der abhängigen Ansprüche.

Die so erfindungsgemäß entstandene Rohr-/Schlauchverbindung zeichnet sich durch einen besonders festen Halt zwischen Rohr bzw. Armatur und Schlauch aus. Sie zeigt eine sehr gute Dichtleistung, ohne dass die Schlauchinnenschicht beschädigt worden ist.

Weitere vorteilhafte Ausgestaltungen der beanspruchten Verfahren sowie des beanspruchten Rohres sind Gegenstand der abhängigen Ansprüche.

Der Beschreibung sind acht Figuren beigefügt, wobei
- Figur 1: ein Rohr im Ausgangszustand;
- Figur 2: eine Vorrichtung zum Aufbringen von Wülsten im Bereich einer Lochscheibe auf dem Rohr;
- Figur 3: das Rohr mit axial festgelegter Lochscheibe;
- Figur 4: Vorrichtungen zum Einbringen einer zweiten Erhebung bzw. eines Bundes vor der Lochscheibe in das Rohr;
- Figur 5: das Rohr mit ausgebildeter zweiter Erhebung vor der Lochscheibe;
- Figur 6: Rolliervorrichtung zum Einbringen eines Zahnprofils in die Außenseite des Rohres im Schlauchanschlussbereich;
- Figur 7: das Rohr mit eingebrachtem Zahnprofil im Schlauchanschlussbereich, aufgeschobenem Schlauch und aufgeschobener Verpresshülse; und
- Figur 8: das Rohr mit aufgeschobenem Schlauch in dem Schlauchanschlussbereich und mit verpresster Verpresshülse
zeigt.

Die Erfindung wird nachfolgend unter Bezugnahme auf die genannten Figuren in Form von Ausführungsbeispielen detailliert beschrieben. In allen Figuren sind gleiche technische Elementen mit gleichen Bezugszeichen bezeichnet.

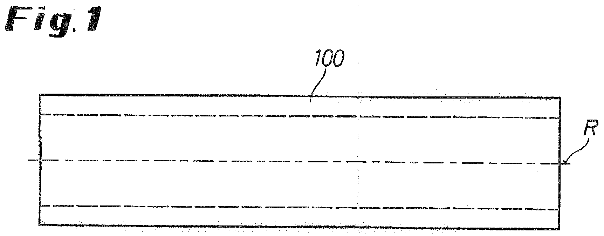

Figur 1 zeigt ein Rohr 100 in seinem Ausgangszustand mit seiner Längsachse R, die sich in axialer Richtung des Rohres erstreckt.

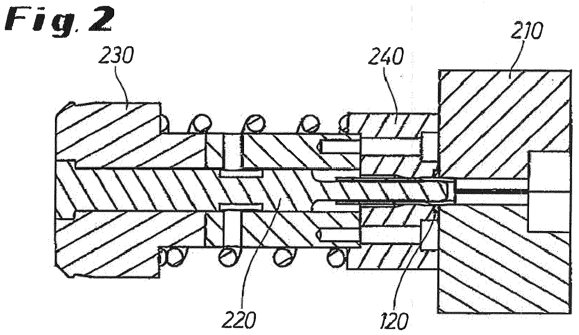

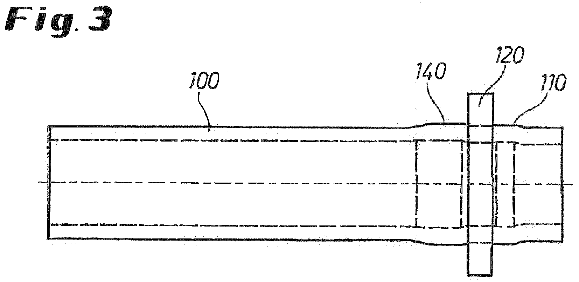

Gemäß einem ersten Schritt des erfindungsgemäßen Verfahrens wird dieses Rohr 100 in einem Haltewerkzeug 210 so eingespannt, dass sein schlauchseitiges Ende frei bzw. außen vor bleibt. Auf das freie bzw. schlauchseitige Ende des Rohres ist eine Lochscheibe 120 aufgeschoben, welche in Figur 2 an dem Haltewerkzeug 210 anschlägt. Insofern definiert das Haltewerkzeug 210 eine vorbestimmte axiale Position für die Lochscheibe 120. Auf das freie Ende des Rohres 100 ist ein Drückzylinder 230 aufgeschoben, in dem ein Dorn 220 axial geführt ist. Der Dorn 220 hat einen Außendurchmesser, der größer ist als der ursprüngliche Innendurchmesser des Rohres. Der Dorn 220 wird mit Hilfe der Drückzylinders 230 in das Rohr 100 hineingeschoben/hineingetrieben, wodurch das Rohr aufgrund des größeren Außendurchmessers des Domes aufgeweitet wird. Diese Aufweitungen erfolgen auch vor und hinter der aufgeschobenen Lochscheibe und führen dort zur Ausbildung der Wülste 110 und 140; siehe Figur 3. Durch die Ausbildung dieser Wülste vor und hinter der Lochscheibe 120 ist diese axial festgelegt.

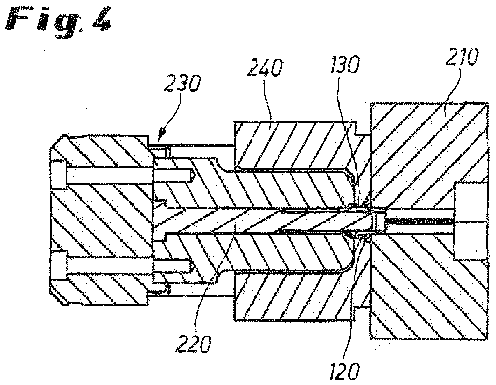

Die Figuren 4 bis 8 betreffen das Einbringen eines sich radial nach außen erhebenden Bundes 130 in die Wandung des Rohres. Zu diesem Zweck wird zunächst gemäß Figur 4 ein erstes Werkzeug 240 zwischen das Haltewerkzeug 210 und den Drückzylinder 230 geschaltet, wobei das erste Werkzeug 240 an seiner Innenseite so konturiert ist, dass es die Ausbildung einer vergrößerten Wulst 140 vor der Lochscheibe 120 zulässt. Das Ausbilden dieser vergrößerten Wulst erfolgt dann durch erneutes Durchschieben eines Dorns durch das Rohr.

Danach erfolgt die Ausbildung der zweiten Erhebung 130 durch Stauchung des Rohres mit Hilfe des Dorns 220, wobei dieser so lang ausgebildet ist, dass er sich zunächst auch bis unter bzw. bis auf Höhe der Lochscheibe erstreckt. Dies ist wichtig, um zu verhindern, dass sich die Wandung des Rohres im Falle der Stauchung an unerwünschter Stelle, insbesondere im näheren Bereich der Lochscheibe verformen würde. Sobald die zweite Erhebung 130 zunächst mit einem vergleichsweise geringen Außendurchmesser ausgebildet ist, kann nachfolgend in einem zweiten Stauchvorgang der Außendurchmesser der zweiten Erhebung 130 vergrößert werden; dazu reicht dann ein verkürzter Dorn 220, der sich nur noch bis vor die zweite Erhebung erstrecken muss.

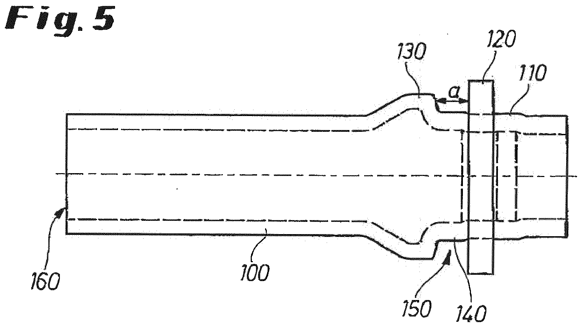

Das Ergebnis der bisherigen Schritte ist in Figur 5 gezeigt. Durch die beiden Wülste 110, 140 ist die Lochscheibe 120 axial an einer vorbestimmten Position in Bezug auf die schlauchseitige Öffnung 160 des Rohres festgelegt. Zwischen der Lochscheibe 120 und der schlauchseitigen Öffnung 160 des Rohres ist in einem ebenfalls vorbestimmten axialen Abstand a die zweite Erhebung 130 ausgebildet. Der Außendurchmesser dieser zweiten Erhebung 130 ist kleiner als der Außendurchmesser 120 der Lochscheibe. Der Außendurchmesser der zweiten Erhebung 130 ist jedenfalls nur so groß gewählt, dass die zu seiner Herstellung erfolgte Kaltumformung nicht zu einer unzulässig starken Reduzierung der Druckfestigkeit des Rohres 100 führt. Allerdings ist der Außendurchmesser der zweiten Erhebung 130 abgestimmt auf die Dicke des aufzuschiebenden Schlauches. Vorzugsweise entspricht die Differenz zwischen dem Außendurchmesser der zweiten Erhebung 130 und dem Außendurchmesser des Rohres 100 in etwa der Dicke der Wandung des aufzuschiebenden Schlauches.

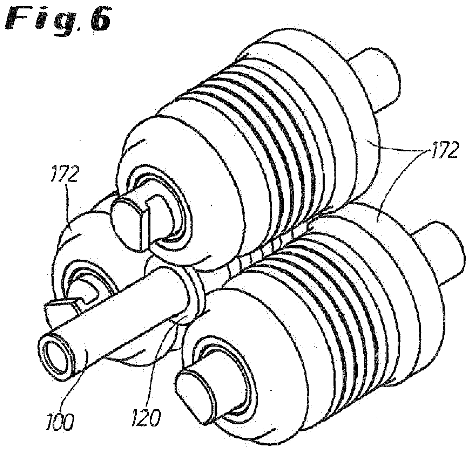

Figur 6 zeigt drei Rollierwalzen 172 zum Einbringen eines Zahnprofils in das schlauchseitige Ende des Rohres. Das Zahnprofil 170 ist zwischen der schlauchseitigen Öffnung 160 des Rohres und dem Bund 130 angeordnet.

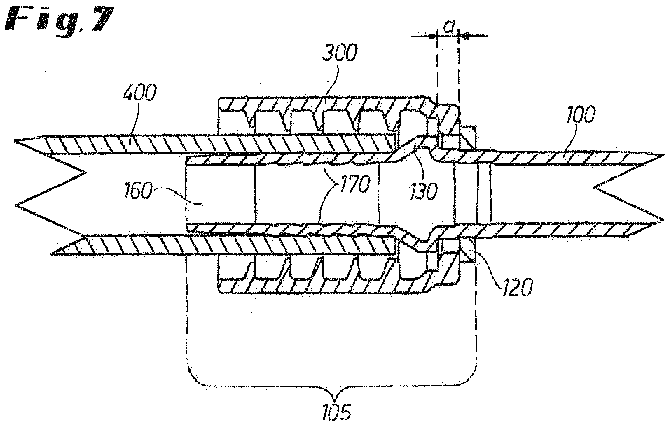

Figur 7 zeigt schließlich das Rohr 100 mit erfindungsgemäß ausgebildetem Schlauchanschlussbereich 105. Das schlauchseitige Ende des Rohres wird einerseits begrenzt durch die Lochscheibe 120 und andererseits durch die schlauchseitige Öffnung 160. Dazwischen ist in dem besagten vorbestimmten Abstand a von der Lochscheibe der Bund 130 zu erkennen und zwischen dem Bund und der Öffnung 160 ist ein Zahnprofil 170 zu erkennen. Weiterhin ist in Figur 7 ein Schlauch 400 zu erkennen, welcher bis vor den Bund 130 auf das schlauchseitige Ende aufgeschoben ist. Schließlich ist die Verpresshülse 300 zu in unverpresstem Zustand zu erkennen.

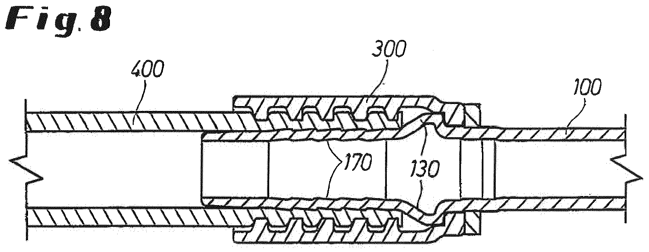

Figur 8 zeigt die Rohr-Schlauchverbindung gemäß Figur 7, allerdings in verpresstem Zustand. Konkret ist die Verpresshülse 300 in die Nut zwischen der Lochscheibe 120 und dem Bund 130 hinein verpresst und gleichzeitig ist die Verpresshülse 300im Bereich des Zahnprofils 170 mit dem aufgeschobenen Ende des Schlauches 400 verpresst bzw. vercrimpt ist.

### Bezugszeichenliste

- 100: Rohr
- 105: Schlauchanschluss
- 110: erster Wulst
- 120: Lochscheibe
- 130: Bund = zweite Erhebung
- 140: zweiter Wulst
- 150: Nut
- 160: schlauchseitige Öffnung des Rohres
- 170: Zahnprofil
- 172: Rollierwalzen

- 210: Haltewerkzeug
- 220: Dorn
- 230: Drückzylinder
- 240: erstes Werkzeug
- 250: zweites Werkzeug

- 300: Verpresshülse

- 400: Schlauch

- a: axialer Abstand zwischen Lochscheibe und Bund
- d: Innendurchmesser des Rohres
- D: Außendurchmesser des Dorns
- R: axiale Richtung des Rohres, insbesondere seines Schlauchanschlussbereiches

## Patentansprüche

1. Verfahren zum Ausbilden eines Schlauchanschlusses (105) an einem Ende eines Rohres (100), aufweisend folgende Schritte:
Einspannen des Rohres (100) außerhalb seines Endes für den Schlauchanschluss;
Aufschieben einer Lochscheibe (120) an eine vorbestimmte axiale Position auf dem Rohrende und Halten der Lochscheibe an dieser Position in fester Relation zu dem eingespannten Rohr mit Hilfe eines Haltewerkzeugs (210); und
Fixieren der Lochscheibe (120) an der vorbestimmten Position durch Ausbilden von jeweils einem Wulst (130, 140) vor und hinter der Lochscheibe (120).

2. Verfahren nach Anspruch 1,
**dadurch gekennzeichnet,**
**dass** das Ausbilden von jeweils einem Wulst (130, 140) vor und hinter der Lochscheibe (120) erfolgt durch Hineinschieben eines Dorns (220) durch das Rohr, wobei der Außendurchmesser des Dorns größer ist als der ursprüngliche Innendurchmesser (d) des Rohres.

3. Verfahren nach Anspruch 1 oder 2,
weiterhin **gekennzeichnet durch** folgende Schritte:
Einbringen eines sich radial nach außen erhebenden Bundes (130) in die Wandung des Rohres (100) in einem vorbestimmten axialen Abstand (a) zu der Lochscheibe (120), zum Ausbilden einer umlaufenden Nut (150) zwischen der Lochscheibe und dem Bund, wobei der Bund (130) näher an der schlauchseitigen Öffnung (160) des Rohres (100) angeordnet ist als die Lochscheibe (120).

4. Verfahren nach Anspruch 3,
**dadurch gekennzeichnet,**
**dass** das Einbringen des Bundes durch einen mehrstufigen axialen Kaltumformprozess inklusive einer Stauchung des Rohres erfolgt.

5. Verfahren nach Anspruch 3 oder 4,
weiterhin **gekennzeichnet durch**
Einbringen von einem Zahnprofil (170) in die Außenseite des Rohres zwischen der schlauchseitigen Öffnung (160) des Rohres und dem Bund (130).

6. Verfahren nach Anspruch 5,
**dadurch gekennzeichnet,**
**dass** das Einbringen des Zahnprofils (170) durch Rollieren erfolgt.

7. Verfahren zum Anschließen eines Schlauchs (400) an einem schlauchseitigen Ende eines Rohres (100), aufweisend folgende Schritte:
Ausbilden eines Schlauchanschlusses (105) an dem schlauchseitigen Ende des Rohres mit dem Verfahren nach einem der vorangegangenen Ansprüche;
Aufschieben einer Verpresshülse (300) auf den Schlauchanschluss (105) bis vor die Lochscheibe (120), welche einen Anschlag für die Verpresshülse (300) bildet;
Aufschieben eines Endes des Schlauches (400) auf den Schlauchanschlussbereich bis vor oder auf den Bund (130) unter die Verpresshülse (300); und
Radiales Verpressen der Verpresshülse in die Nut (150) zwischen der Lochscheibe (120) und dem Bund (130) und mit dem Ende des Schlauches.

8. Verfahren nach Anspruch 7,
**dadurch gekennzeichnet, dass**
das Aufschieben der Verpresshülse auf den Schlauchanschlussbereich von der schlauchseitigen Öffnung des Rohres her erfolgt.

9. Rohr (100) mit einem Schlauchanschluss (105) an mindestens einem seiner Enden, wobei der Schlauchanschluss aufweist:
eine auf das Rohr (100) aufgeschobene Lochscheibe (120), welche durch zwei Wülste (130, 140) in der Wandung des Rohres in axialer Richtung an einer vorbestimmten Position festgelegt ist.

10. Rohr nach Anspruch 9,
**dadurch gekennzeichnet, dass**
ein sich radial nach außen erhebender Bund (130) in der Wandung des Rohres (100) ausgebildet ist;
der Bund (130) in einem vorbestimmten axialen Abstand (a) zu der Lochscheibe (120) angeordnet ist zum Ausbilden einer umlaufenden Nut (150) zwischen der Lochscheibe (120) und dem Bund (130), wobei der Bund näher an der schlauchseitigen Öffnung (160) des Rohres angeordnet ist als die Lochscheibe (120).

11. Rohr (100) nach Anspruch 10,
**gekennzeichnet durch**
ein Zahnprofil (170) mit in axialer Richtung (R) abgestuften Außendurchmessern des Rohres zwischen der schlauchseitigen Öffnung (160) des Rohres und dem Bund (130).

12. Rohr (100) nach einem der vorangegangenen Ansprüche 9 bis 11,
**dadurch gekennzeichnet,**
**dass** eine Verpresshülse (300) auf den Schlauchanschlussbereich bis vor die Lochscheibe (120) aufgeschoben ist, welche einen Anschlag für die Verpresshülse bildet;
**dass** ein Ende eines Schlauches (400) auf den Schlauchanschlussbereich (105) bis vor oder auf den Bund (130) unter die Verpresshülse (300) aufgeschoben ist; und
**dass** die Verpresshülse in die Nut (150) zwischen der Lochscheibe (120) und dem Bund (130) und mit dem Ende des Schlauches (400) verpresst ist.
